# EUROPEAN PATENT APPLICATION

(11) **EP 4 787 696 A1**
(43) Date of publication of application: **05.08.2026**
(21) Application number: 23953900.0
(22) Date of filing: 26.10.2023
(51) Int. Cl.: H02M 1/32, H02M 3/158, H02M 1/088

(54) **THREE-LEVEL DC/DC CIRCUIT AND POWER SUPPLY SYSTEM**

(30) Priority: 26.09.2023 CN 202311258244
(71) Applicant: SUNGROW HYDROGEN SCI. & TECH. CO., LTD, Hefei, Anhui 230088 (CN)
(72) Inventor: JIANG, Cai, Hefei, Anhui 230088 (CN); WANG, Fei, Hefei, Anhui 230088 (CN); GONG, Shengwei, Hefei, Anhui 230088 (CN); LIU, Xiaohui, Hefei, Anhui 230088 (CN); WANG, Chengyue, Hefei, Anhui 230088 (CN); SUN, Longlin, Hefei, Anhui 230088 (CN)
(74) Representative: Epping - Hermann - Fischer
(86) International application number: PCT/CN2023/126721
(87) International publication number: WO 2025/065765

(57) **Abstract**

The present application discloses a three-level DC/DC circuit, comprising: an anti-backflow device, an input capacitor, a first switch transistor, a second switch transistor, a third switch transistor, a fourth switch transistor, a floating capacitor, an inductor, and an output capacitor. The positive terminal of a load of the DC/DC circuit is not connected to ground. The anti-backflow device is connected to a current path between the output positive terminal and the input positive terminal, and the anti-backflow device cuts off conduction when the current direction is from the output positive terminal to the input positive terminal. When the input positive terminal is connected to ground, the anti-backflow device cuts off conduction when the current direction is from the output positive terminal to the input positive terminal. During normal operation of the three-level DC/DC circuit, the anti-backflow device conducts normally, thereby avoiding the risk of short-circuiting from the output positive terminal to the input positive terminal of the DC/DC circuit and protecting the components within the three-level DC/DC circuit.

## Description

The present application claims the priority to Chinese Patent Application No. 202311258244.5, titled "THREE-LEVEL DC/DC CIRCUIT AND POWER SUPPLY SYSTEM", filed on September 26, 2023 with the China National Intellectual Property Administration, which is incorporated herein by reference in its entirety.

### FIELD

The present disclosure relates to the technical field of new energy, and in particular to a three-level DC/DC circuit and a power supply system.

### BACKGROUND

Currently, with the continuous development of new energy, DC/DC circuits are increasingly used as the last stage of a power supply system to provide a direct-current voltage. For example, in an application scenario of electrolyzers, which are powered by a direct-current power supply, the DC/DC circuits provide a direct-current voltage for the electrolyzers to operate.

Typically, a negative terminal or a neutral point of the electrolyzer as a load of the DC/DC circuit is grounded. For this type of DC/DC circuit for which the negative terminal or the neutral point of the load is grounded, grounding may occur due to insulation damage or a conductive foreign object bridging a copper busbar during operation of the DC/DC circuit, which may cause a positive input terminal of the DC/DC circuit to be grounded.

Since the negative terminal or the neutral point of the load of the DC/DC circuit is grounded, the positive input terminal of the DC/DC circuit is grounded when an abnormality occurs, and thus there is a risk of a short circuit between a positive output terminal and the positive input terminal of the DC/DC circuit, which could damage devices in the DC/DC circuit.

### SUMMARY

In view of this, a three-level DC/DC circuit and a power supply system are provided according to the present disclosure, to prevent a short circuit between a positive output terminal and a positive input terminal of the DC/DC circuit when the positive input terminal of the DC/DC circuit is grounded.

A three-level DC/DC circuit is provided according to the present disclosure. The three-level DC/DC circuit includes: an anti-reverse current device, an input capacitor, a first switching transistor, a second switching transistor, a third switching transistor, a fourth switching transistor, a floating capacitor, an inductor, and an output capacitor. A negative terminal or a neutral point of a load of the DC/DC circuit is grounded.

A first terminal of the input capacitor is connected to a first node, and a second terminal of the input capacitor is connected to a negative input terminal of the DC/DC circuit. A positive input terminal of the DC/DC circuit is connected to the first node. A first terminal of the output capacitor is connected to a fourth node, and a second terminal of the output capacitor is connected to a negative output terminal of the DC/DC circuit. A positive output terminal of the DC/DC circuit is connected to the fourth node.

A first terminal of the first switching transistor is connected to the first node, and a second terminal of the first switching transistor is connected to a second node. A first terminal of the second switching transistor is connected to the second node, and a second terminal of the second switching transistor is connected to a third node. A first terminal of the inductor is connected to the third node, and a second terminal of the inductor is connected to the fourth node. A first terminal of the third switching transistor is connected to the third node, and a second terminal of the third switching transistor is connected to a first terminal of the fourth switching transistor. A second terminal of the fourth switching transistor is connected to the negative input terminal of the DC/DC circuit. A first terminal of the floating capacitor is connected to the second node, and a second terminal of the floating capacitor is connected to the second terminal of the third switching transistor.

The anti-reverse current device is connected into a circuit path between the positive output terminal and the positive input terminal of the DC/DC circuit, and the anti-reverse current device is turned off in response to a current flowing from the positive output terminal to the positive input terminal.

In an embodiment, the anti-reverse current device is at least one of:
a diode, a semi-controlled semiconductor device or a fully-controlled semiconductor device.

In response to the anti-reverse current device being the semi-controlled semiconductor device or the fully-controlled semiconductor device, the DC/DC circuit further includes a controller.

The controller is electrically connected to the semi-controlled semiconductor device or the fully-controlled semiconductor device.

The controller is configured to control a switching state of the semi-controlled semiconductor device or the fully-controlled semiconductor device.

In an embodiment, in response to the anti-reverse current device being the semi-controlled semiconductor device or the fully-controlled semiconductor device, the DC/DC circuit further includes a detection device.

The detection device is configured to detect at least one of a voltage of the positive input terminal to ground, a voltage of the input capacitor, a voltage change rate of the input capacitor, a current change rate of the inductor, a voltage of the floating capacitor, and a voltage change rate of the floating capacitor, and send a detection result to the controller.

The controller is configured to report a fault in response to a ground fault of the positive input terminal being determined based on the detection result, and control the fully-controlled semiconductor device that allows bidirectional current flow during operation to be turned off.

In response to the ground fault of the positive input terminal, the semi-controlled semiconductor device that allows unidirectional current flow during operation or the fully-controlled semiconductor device that allows unidirectional current flow during operation is automatically turned off.

The controller is further configured to control the semi-controlled semiconductor device or the fully-controlled semiconductor device to be turned on when a ground fault does not occur at the positive input terminal.

In an embodiment, the anti-reverse current device is connected between the positive input terminal of the DC/DC circuit and the first node.

In an embodiment, the anti-reverse current device is connected between the first node and the second node.

In an embodiment, the anti-reverse current device is connected between the third node and the fourth node.

In an embodiment, the anti-reverse current device is connected between the fourth node and the positive output terminal of the DC/DC circuit.

In an embodiment, the anti-reverse current device is connected between the second node and the third node.

In an embodiment, the input capacitor includes a first input capacitor and a second input capacitor.

A first terminal of the second input capacitor is connected to a fifth node, and a second terminal of the second input capacitor is connected to the negative input terminal of the DC/DC circuit. The positive input terminal of the DC/DC circuit is connected to the fifth node, and the anti-reverse current device is connected between the first node and the fifth node.

In an embodiment, the output capacitor includes a first output capacitor and a second output capacitor.

A first terminal of the second output capacitor is connected to a sixth node, and a second terminal of the second output capacitor is connected to the negative output terminal of the DC/DC circuit. The positive output terminal of the DC/DC circuit is connected to the sixth node, and the anti-reverse current device is connected between the fourth node and the sixth node.

A power supply system is further provided according to the present disclosure. The power supply system includes the three-level DC/DC circuit described above, and further includes an electrolyzer.

The positive output terminal of the three-level DC/DC circuit is connected to a positive terminal of the electrolyzer. The negative output terminal of the three-level DC/DC circuit is connected to a negative terminal of the electrolyzer. The negative terminal or a neutral point of the electrolyzer is connected to ground.

As a result, the present disclosure provides the following beneficial effects.

The three-level DC/DC circuit according to embodiments of the present disclosure is provided with an anti-reverse current device. The anti-reverse current device is connected into a circuit path between the positive output terminal and the positive input terminal of the DC/DC circuit. When the positive input terminal is grounded, the anti-reverse current device is turned off in response to a current flowing from the positive output terminal to the positive input terminal. During normal operation of the three-level DC/DC circuit, the anti-reverse current device is turned on normally. Therefore, a short circuit between the positive output terminal and the positive input terminal of the DC/DC circuit is prevented, and devices in the three-level DC/DC circuit are protected from being damaged.

### BRIEF DESCRIPTION OF THE DRAWINGS

FIG. 1 is a diagram illustrating an application scenario of a three-level DC/DC circuit according to an embodiment of the present disclosure;
FIG. 2 is a schematic diagram of a three-level DC/DC circuit with a floating capacitor according to an embodiment of the present disclosure;
FIG. 3 is a diagram schematically illustrating a short-circuit current when a positive input terminal is grounded according to an embodiment of the present disclosure;
FIG. 4 is a schematic diagram of a three-level DC/DC circuit according to another embodiment of the present disclosure;
FIG. 5 is a schematic diagram of a three-level DC/DC circuit according to another embodiment of the present disclosure;
FIG. 6 is a schematic diagram of a diode which serves as an anti-reverse current device according to an embodiment of the present disclosure;
FIG. 7 is a schematic diagram illustrating that an anti-reverse current device is connected into a three-level DC/DC circuit at a position P1 according to an embodiment of the present disclosure;
FIG. 8 is a schematic diagram illustrating that an anti-reverse current device is connected into a three-level DC/DC circuit at a position P2 according to an embodiment of the present disclosure;
FIG. 9 is a schematic diagram illustrating that an anti-reverse current device is connected into a three-level DC/DC circuit at a position P3 according to an embodiment of the present disclosure;
FIG. 10 is a schematic diagram illustrating that an anti-reverse current device is connected into a three-level DC/DC circuit at a position P4 according to an embodiment of the present disclosure;
FIG. 11 is a schematic diagram illustrating that an anti-reverse current device is connected into a three-level DC/DC circuit at a position P5 according to an embodiment of the present disclosure;
FIG. 12 is a schematic diagram of a three-level DC/DC circuit with two input capacitors according to an embodiment of the present disclosure;
FIG. 13 is a schematic diagram of a three-level DC/DC circuit with two output capacitors according to an embodiment of the present disclosure; and
FIG. 14 is a schematic diagram of a power supply system according to an embodiment of the present disclosure.

### DETAILED DESCRIPTION

In order to enable those skilled in the art to better understand and implement the technical solutions according to the embodiments of the present disclosure, application scenarios are introduced first hereinafter.

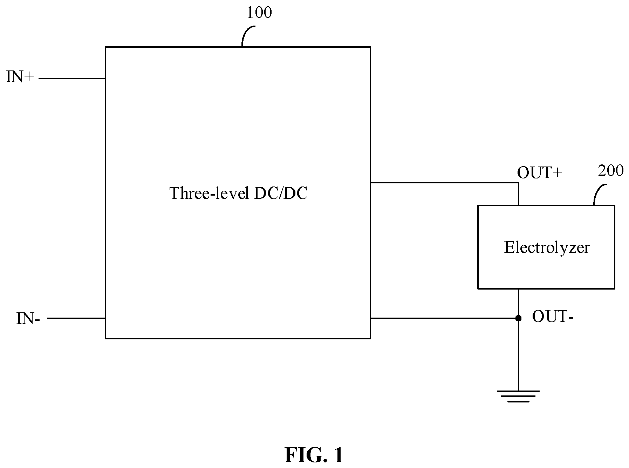

Reference is made to FIG. 1, which is a diagram illustrating an application scenario of a three-level DC/DC circuit according to an embodiment of the present disclosure.

A type of a load in a three-level DC/DC circuit 100 according to the embodiment of the present disclosure is not limited. The load may be directly powered by the three-level DC/DC circuit 100 and a negative terminal or a neutral point of the load is grounded. For example, the load may be an alkaline electrolyzer, and a negative terminal or a neutral point of the alkaline electrolyzer is grounded.

To facilitate understanding, description is made with an example where the load is an electrolyzer 200 and a negative terminal of the electrolyzer 200 is grounded.

The three-level DC/DC circuit 100 includes a positive input terminal IN+ and a negative input terminal IN-, and further includes a positive output terminal OUT+ and a negative output terminal OUT-. The positive output terminal OUT+ is connected to a positive terminal of the electrolyzer 200, and the negative output terminal OUT- is connected to a negative terminal of the electrolyzer 200.

Hereinafter a three-level DC/DC circuit with a floating capacitor is described.

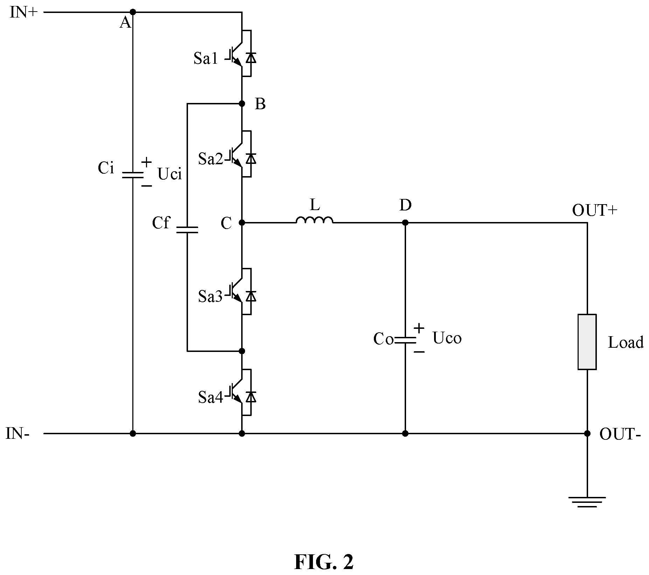

Reference is made to FIG. 2, which is a schematic diagram of a three-level DC/DC circuit with a floating capacitor according to an embodiment of the present disclosure.

The three-level DC/DC circuit according to the embodiment of the present disclosure includes: an input capacitor Ci, a first switching transistor Sa1, a second switching transistor Sa2, a third switching transistor Sa3, a fourth switching transistor Sa4, a floating capacitor Cf, an inductor L, and an output capacitor Co. A negative terminal or a neutral point of a load Load of the DC/DC circuit is grounded.

A first terminal of the input capacitor Ci is connected to a positive input terminal IN+ of the DC/DC circuit, and a second terminal of the input capacitor Ci is connected to a negative input terminal IN- of the DC/DC circuit. A first terminal of the output capacitor Co is connected to a positive output terminal OUT+ of the DC/DC circuit, and a second terminal of the output capacitor Co is connected to a negative output terminal OUT- of the DC/DC circuit.

A first terminal of the first switching transistor Sa1 is connected to the first terminal of the input capacitor Ci, and a second terminal of the first switching transistor Sa1 is connected to a first terminal of the second switching transistor Sa2. A first terminal of the third switching transistor Sa3 is connected to a second terminal of the second switching transistor Sa2, and a second terminal of the third switching transistor Sa3 is connected to a first terminal of the fourth switching transistor Sa4. A second terminal of the fourth switching transistor Sa4 is connected to the negative input terminal IN-. A first terminal of the floating capacitor Cf is connected to the first terminal of the second switching transistor Sa2, and a second terminal of the floating capacitor Cf is connected to the second terminal of the third switching transistor Sa3.

A first terminal of the inductor L is connected to the first terminal of the third switching transistor Sa3, and a second terminal of the inductor L is connected to the first terminal of the output capacitor Co.

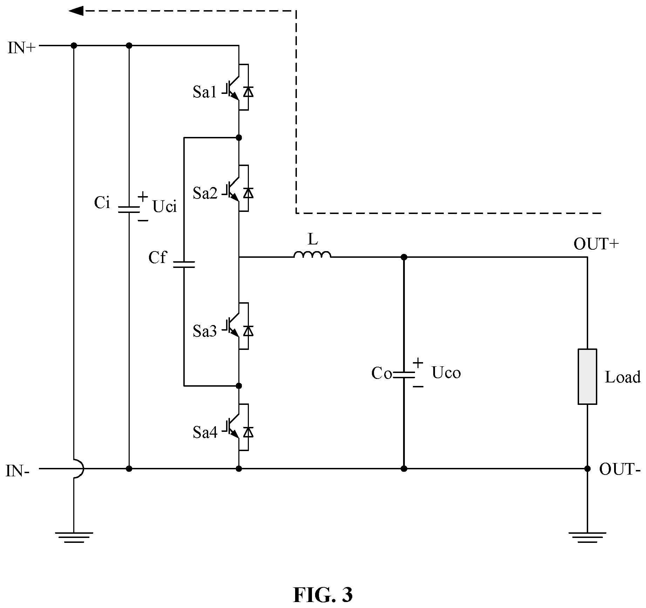

As shown in FIG. 3, when the positive input terminal IN+ of the DC/DC circuit is grounded, a current path from the positive output terminal OUT+ to the positive input terminal IN+ exists, as shown by a dotted line with an arrow in FIG. 3. The output capacitor Co and the load Load may be short-circuited through the inductor L, an anti-parallel diode of the first switching transistor Sa1 and an anti-parallel diode of the second switching transistor Sa2, and a short circuit between the positive input terminal and the negative output terminal of the DC/DC circuit may exist.

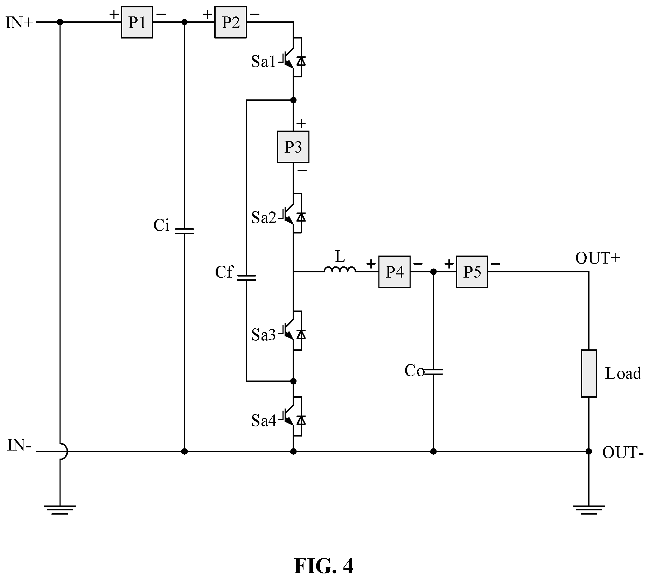

To address the above technical problems, solutions according to the embodiments of the present disclosure are described below in conjunction with the drawings. Reference is made to FIG. 4, which is a schematic diagram of a three-level DC/DC circuit according to another embodiment of the present disclosure.

The three-level DC/DC circuit according to the embodiment of the present disclosure includes: an anti-reverse current device, an input capacitor Ci, a first switching transistor Sa1, a second switching transistor Sa2, a third switching transistor Sa3, a fourth switching transistor Sa4, a floating capacitor Cf, an inductor L, and an output capacitor Co. A negative terminal or a neutral point of a load Load of the DC/DC circuit is grounded.

A first terminal of the input capacitor Ci is connected to a first node A, and a second terminal of the input capacitor Ci is connected to a negative input terminal IN- of the DC/DC circuit. A positive input terminal IN+ of the DC/DC circuit is connected to the first node A. A first terminal of the output capacitor Co is connected to a fourth node D, and a second terminal of the output capacitor Co is connected to a negative output terminal OUT- of the DC/DC circuit. A positive output terminal OUT+ of the DC/DC circuit is connected to the fourth node D.

A first terminal of the first switching transistor Sa1 is connected to the first node A, and a second terminal of the first switching transistor Sa1 is connected to a second node B. A first terminal of the second switching transistor Sa2 is connected to the second node B, and a second terminal of the second switching transistor Sa2 is connected to a third node C. A first terminal of the inductor L is connected to the third node C, and a second terminal of the inductor L is connected to the fourth node D. A first terminal of the third switching transistor Sa3 is connected to the third node C, and a second terminal of the third switching transistor Sa3 is connected to a first terminal of the fourth switching transistor Sa4. A second terminal of the fourth switching transistor Sa4 is connected to the negative input terminal IN-. A first terminal of the floating capacitor Cf is connected to the second node B, and a second terminal of the floating capacitor Cf is connected to a second terminal of the third switching transistor Sa3.

The anti-reverse current device is connected into a circuit path between the positive output terminal and the positive input terminal of the DC/DC circuit, and the anti-reverse current device is turned off in response to a current flowing from the positive output terminal to the positive input terminal.

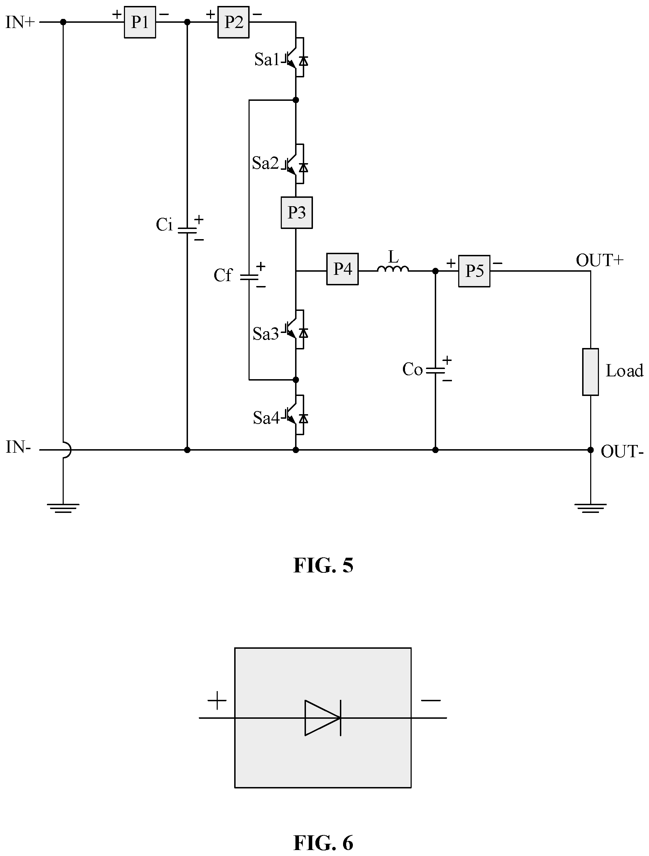

For example, the anti-reverse current device may be arranged at at least one of positions P1, P2, P3, P4, and P5 in FIG. 4. When the anti-reverse current device is arranged at the position P3, it may be arranged at the position P3 in FIG. 4, or at the position P3 in FIG. 5. That is, the relative position between Sa2 and the anti-reverse current device is not limited, and the anti-reverse current device and Sa2 are connected in series between the second terminal of Sa1 and the first terminal of Sa3. Similarly, the anti-reverse current device may be arranged at the position P4 in FIG. 4 or FIG. 5, which is not limited in the present disclosure. That is, the anti-reverse current device and L are connected in series between the first terminal of Sa3 and the first terminal of Co.

During normal operation of the three-level DC/DC circuit, the anti-reverse current device is turned on. When a ground fault occurs at the positive input terminal of the three-level DC/DC circuit, the anti-reverse current device is turned off.

A type of the anti-reverse current device in the three-level DC/DC circuit according to the embodiments of the present disclosure is not limited, and may be selected according to actual requirements as long as it can prevent a current from flowing from the positive output terminal to the positive input terminal of the three-level DC/DC circuit. For example, the anti-reverse current device is at least one of:
a diode, a semi-controlled semiconductor device or a fully-controlled semiconductor device.

In response to the anti-reverse current device being the semi-controlled semiconductor device or the fully-controlled semiconductor device, the DC/DC circuit further includes a controller (not shown in the figures). For example, the controller may be implemented by a single-chip microcomputer, or MCU, or other control chips.

The controller is electrically connected to the semi-controlled semiconductor device or the fully-controlled semiconductor device.

The controller is configured to control a switching state of the semi-controlled semiconductor device or the fully-controlled semiconductor device.

For example, the fully-controlled semiconductor device may be implemented by any one of: an insulate-gate bipolar transistor (IGBT), an integrated gate-commutated thyristor (IGCT), a metal-oxide-semiconductor field-effect transistor (MOSFET), or a silicon carbide SiC device. The semi-controlled semiconductor device may be implemented by a silicon controlled rectifier (SCR), that is, a thyristor.

The controller is electrically connected to the semi-controlled semiconductor device or the fully-controlled semiconductor device, and controls a switching state of the semi-controlled semiconductor device or the fully-controlled semiconductor device. That is, during the normal operation of the three-level DC/DC circuit, the controller controls the semi-controlled semiconductor device or the fully-controlled semiconductor device to be turned on. When the positive input terminal of the three-level DC/DC circuit is grounded, the controller controls the semi-controlled semiconductor device or the fully-controlled semiconductor device to be turned off.

For example, as shown in FIG. 6, the anti-reverse current device is a diode. The diode may be arranged at at least one of positions P1 to P5 in FIG. 4. For example, when the diode is arranged at P1, an anode of the diode is connected to the positive input terminal of the three-level DC/DC circuit, and a cathode of the diode is connected to the first terminal of the input capacitor. When the positive input terminal is grounded, even if a current flows from the positive output terminal to the positive input terminal, the corresponding current path can be blocked due to a reverse cutoff characteristic of the diode, thereby protecting the devices in the three-level DC/DC circuit from being damaged.

In a case where the diode is employed as the anti-reverse current device, the diode can automatically achieve a function of reverse cutoff, without a controller. When a ground fault occurs at the positive input terminal of the three-level DC/DC circuit, the diode can respond quickly and provide protection.

In an embodiment, based on the three-level DC/DC circuit according to the embodiments of the present disclosure, when the anti-reverse current device is the semi-controlled semiconductor device or the fully-controlled semiconductor device, the DC/DC circuit further includes a detection device (not shown in the figures). The detection device is electrically connected to the positive input terminal of the circuit and the controller. The detection device is configured to detect whether the ground fault occurs at the positive input terminal. The controller is configured to report the fault, and is further configured to turn off the fully-controlled semiconductor device that allows bidirectional current flow during operation. It should be understood that when the ground fault occurs at the positive input terminal, the semi-controlled semiconductor device or the fully-controlled semiconductor device that allows unidirectional current flow during operation is automatically turned off. For example, the fully-controlled semiconductor device that allows unidirectional current flow during operation may be an IGBT. The fully-controlled semiconductor device that allows bidirectional current flow during operation may be a MOS.

The detection device is configured to detect at least one of a voltage of the positive input terminal to ground, a voltage of the input capacitor, a voltage change rate of the input capacitor, a current change rate of the inductor, a voltage of the floating capacitor, and a voltage change rate of the floating capacitor, and send a detection result to the controller. For example, the detection device may detect the voltage of the positive input terminal to ground. When the positive input terminal is grounded, the voltage drops significantly, even reaching 0V.

The controller is further configured to control the semi-controlled semiconductor device or the fully-controlled semiconductor device to be turned on when the ground fault does not occur at the positive input terminal, that is, when the circuit operates normally.

Several implementations in which the anti-reverse current device is arranged at different positions are specifically described below.

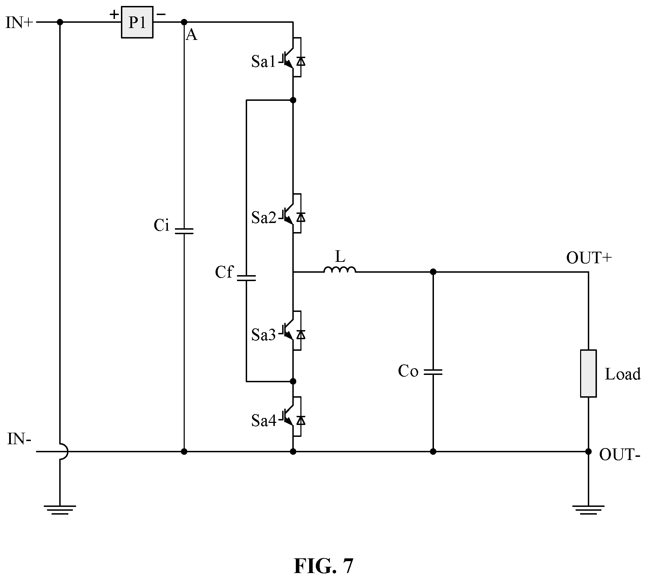

Referring to FIG. 7, in the three-level DC/DC circuit according to an embodiment of the present disclosure, the anti-reverse current device is connected between the positive input terminal IN+ and the first node A, that is, arranged at a position P1.

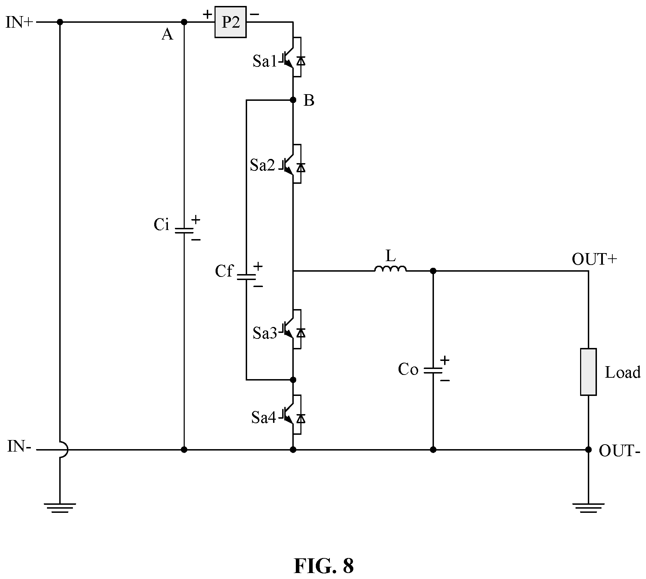

Referring to FIG. 8, in the three-level DC/DC circuit according to an embodiment of the present disclosure, the anti-reverse current device is connected between the first node A and the second node B, that is, arranged at a position P2. It should be understood that the relative position between P2 and Sa1 is not limited as long as P2 and Sa1 are connected in series between the first node A and the second node B, and FIG. 8 merely illustrates an example.

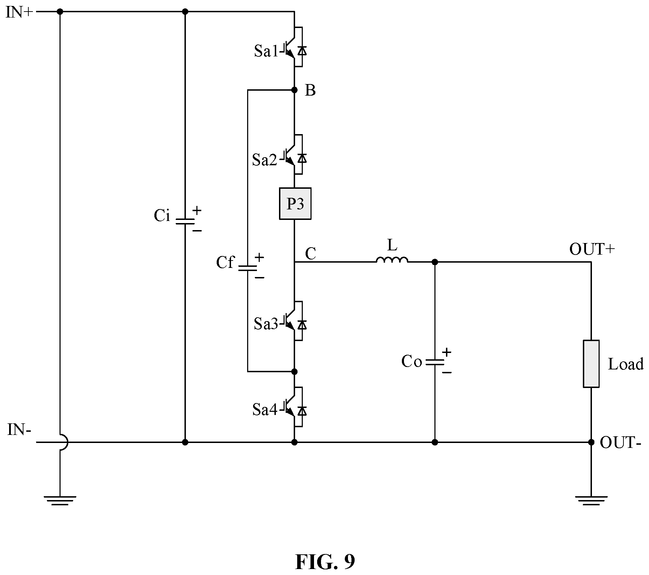

Referring to FIG. 9, in the three-level DC/DC circuit according to an embodiment of the present disclosure, the anti-reverse current device is connected between the second node B and the third node C, that is, arranged at a position P3. It should be understood that the relative position between P3 and Sa2 is not limited as long as P3 and Sa2 are connected in series between the second node B and the third node C, and FIG. 9 merely illustrates an example.

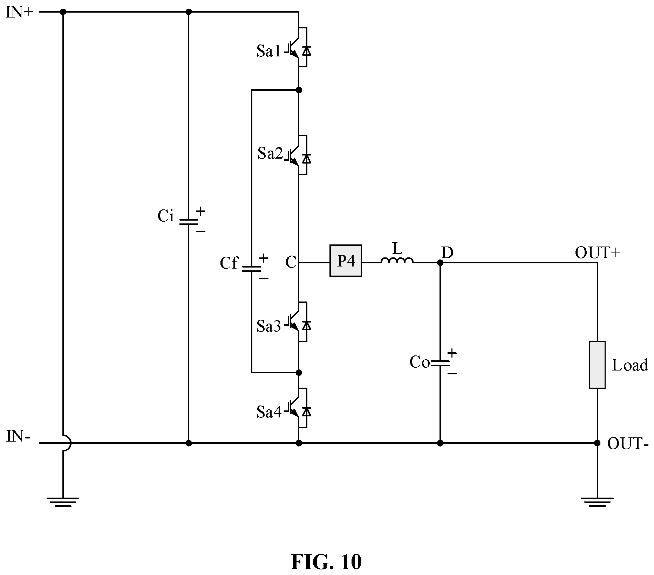

Referring to FIG. 10, in the three-level DC/DC circuit according to an embodiment of the present disclosure, the anti-reverse current device is connected between the third node C and the fourth node D, that is, arranged at a position P4. It should be understood that the relative position between P4 and L is not limited as long as P4 and L are connected in series between the third node C and the fourth node D, and FIG. 10 merely illustrates an example.

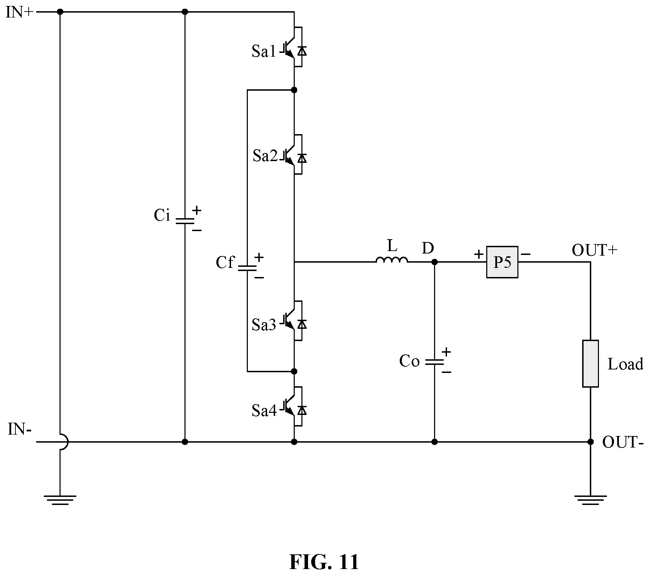

Referring to FIG. 11, in the three-level DC/DC circuit according to an embodiment of the present disclosure, the anti-reverse current device is connected between the fourth node D and the positive output terminal OUT+, that is, arranged at a position P5.

In addition, a type of the first switching transistor and the second switching transistor in the three-level DC/DC circuit according to the embodiments of the present disclosure is not limited. The first switching transistor and the second switching transistor may be implemented by a fully-controlled switching device, can be controlled to be turned on or off, and each includes an anti-parallel diode.

In addition, a quantity of the input capacitor and the output capacitor in the three-level DC/DC circuit according to the embodiments of the present disclosure is not limited. For example, the quantity of the input capacitor may be one or more, and the quantity of the output capacitor may be one or more.

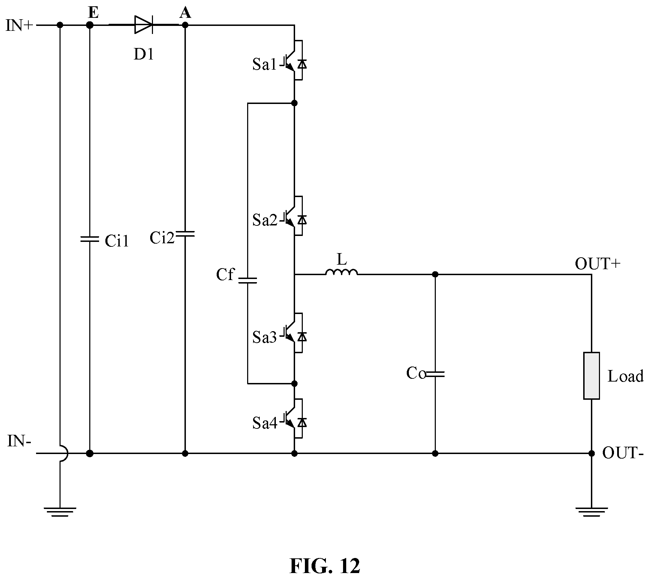

Hereinafter description is made with an example where the quantity of the input capacitor is two. Reference is made to FIG. 12, which is a schematic diagram of a three-level DC/DC circuit with two input capacitors according to an embodiment of the present disclosure.

In the three-level DC/DC circuit according to an embodiment of the present disclosure, the input capacitor includes a first input capacitor Ci1 and a second input capacitor Ci2.

A first terminal of the second input capacitor Ci2 is connected to a fifth node E, and a second terminal of the second input capacitor Ci2 is connected to the negative input terminal IN- of the DC/DC circuit. The positive input terminal IN+ of the DC/DC circuit is connected to the fifth node E, and the anti-reverse current device (exemplified by a diode D1) is connected between the first node A and the fifth node E.

It can be seen from FIG. 12, when the positive input terminal IN+ of the DC/DC circuit is grounded, a current path from the positive output terminal OUT+ to the positive input terminal IN+ is blocked by the diode D1.

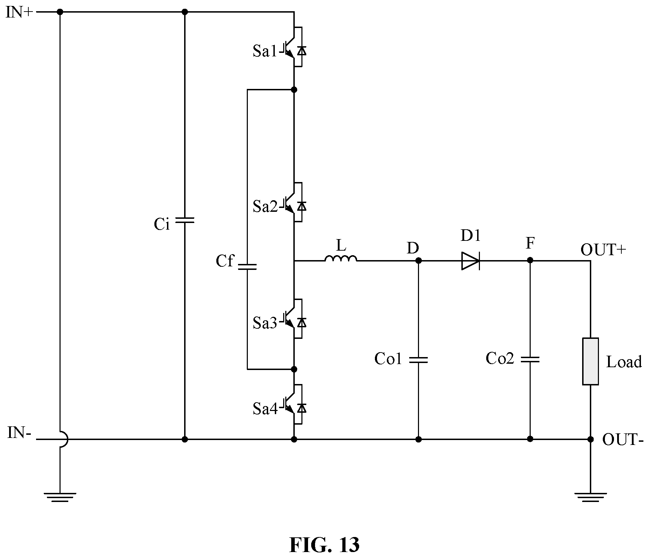

Hereinafter description is made with an example where the quantity of the output capacitor is two. Reference is made to FIG. 13, which is a schematic diagram of a three-level DC/DC circuit with two output capacitors according to an embodiment of the present disclosure.

In the three-level DC/DC circuit according to an embodiment of the present disclosure, the output capacitor includes a first output capacitor Co1 and a second output capacitor Co2.

In an embodiment, the output capacitor includes a first output capacitor Co1 and a second output capacitor Co2.

A first terminal of the second output capacitor Co2 is connected to a sixth node F, and a second terminal of the second output capacitor Co2 is connected to the negative output terminal OUT- of the DC/DC circuit. The positive output terminal OUT- of the DC/DC circuit is connected to the sixth node F, and the anti-reverse current device (exemplified by a diode D1) is connected between the fourth node D and the sixth node F.

It can be seen from FIG. 13, when the positive input terminal IN+ of the DC/DC circuit is grounded, a current path from the positive output terminal OUT+ to the positive input terminal IN+ is blocked by the diode D1.

Based on the three-level DC/DC circuit described in the above embodiments, a power supply system is further provided according to an embodiment of the present disclosure, which is described below in detail in conjunction with the drawings.

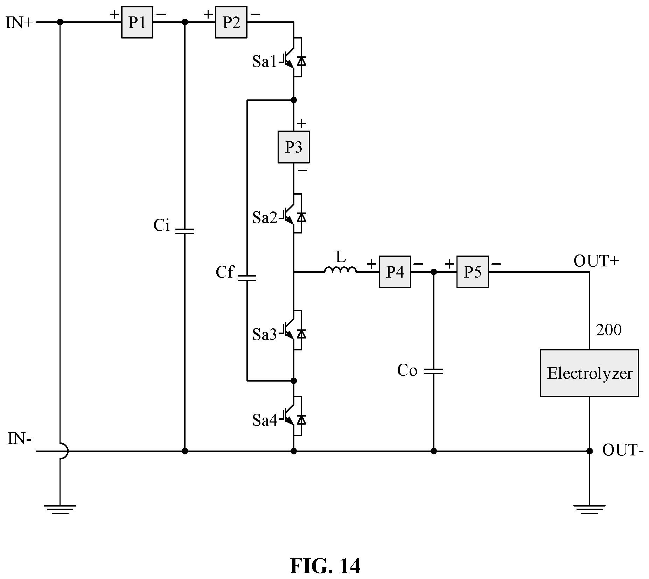

Reference is made to FIG. 14, which is a schematic diagram of a power supply system according to an embodiment of the present disclosure.

The power supply system according to an embodiment of the present disclosure includes the three-level DC/DC circuit described in the above embodiments, and further includes: an electrolyzer 200.

A positive output terminal of the three-level DC/DC circuit is connected to a positive terminal of the electrolyzer 200. A negative output terminal of the three-level DC/DC circuit is connected to a negative terminal of the electrolyzer 200. The negative terminal of the electrolyzer 200 is grounded.

The electrolyzer 200 may be an alkaline electrolyzer. Description is made with an example that the negative terminal of the electrolyzer 200 is grounded. Alternatively, a neutral point of the electrolyzer 200 may be grounded.

Since the anti-reverse current device is provided at at least one of the positions P1 to P5 in the three-level DC/DC circuit, a current path from the positive terminal of the electrolyzer to the positive input terminal IN+ of the three-level DC/DC circuit is blocked when the positive input terminal IN+ is grounded, and thus the devices in the three-level DC/DC circuit can be protected from being damaged.

It should be noted that the embodiments in this specification are described in a progressive manner. Each of the embodiments focuses on differences from other embodiments, and the same or similar parts of the embodiments may be referenced to each other. Descriptions of the system or apparatus disclosed in the embodiments are simplified, since the system or apparatus corresponds to the method disclosed in the embodiments, reference may be made to the description of the method for related explanations.

The disclosed embodiments are described above so that those skilled in the art can implement or use the present disclosure. Various modifications to these embodiments may be apparent to those skilled in the art. The general principles defined herein may be implemented in other embodiments without departing from the spirit or scope of the present application. Therefore, the present disclosure is not limited to the embodiments illustrated herein, but should comply with the widest scope consistent with the principles and novel features disclosed herein.

## Claims

1. A three-level DC/DC circuit, comprising: an anti-reverse current device, an input capacitor, a first switching transistor, a second switching transistor, a third switching transistor, a fourth switching transistor, a floating capacitor, an inductor, and an output capacitor, wherein
a negative terminal or a neutral point of a load of the DC/DC circuit is grounded;
a first terminal of the input capacitor is connected to a first node, a second terminal of the input capacitor is connected to a negative input terminal of the DC/DC circuit, a positive input terminal of the DC/DC circuit is connected to the first node, a first terminal of the output capacitor is connected to a fourth node, a second terminal of the output capacitor is connected to a negative output terminal of the DC/DC circuit, and a positive output terminal of the DC/DC circuit is connected to the fourth node;
a first terminal of the first switching transistor is connected to the first node, a second terminal of the first switching transistor is connected to a second node, a first terminal of the second switching transistor is connected to the second node, a second terminal of the second switching transistor is connected to a third node, a first terminal of the inductor is connected to the third node, a second terminal of the inductor is connected to the fourth node, a first terminal of the third switching transistor is connected to the third node, a second terminal of the third switching transistor is connected to a first terminal of the fourth switching transistor, a second terminal of the fourth switching transistor is connected to the negative input terminal of the DC/DC circuit, a first terminal of the floating capacitor is connected to the second node, and a second terminal of the floating capacitor is connected to the second terminal of the third switching transistor; and
the anti-reverse current device is connected into a circuit path between the positive output terminal and the positive input terminal of the DC/DC circuit, and the anti-reverse current device is turned off in response to a current flowing from the positive output terminal to the positive input terminal.

2. The three-level DC/DC circuit according to claim 1,
wherein the anti-reverse current device is at least one of: a diode, a semi-controlled semiconductor device or a fully-controlled semiconductor device;
wherein in response to the anti-reverse current device being the semi-controlled semiconductor device or the fully-controlled semiconductor device, the DC/DC circuit further comprises a controller, and wherein
the controller is electrically connected to the semi-controlled semiconductor device or the fully-controlled semiconductor device; and
the controller is configured to control a switching state of the semi-controlled semiconductor device or the fully-controlled semiconductor device.

3. The three-level DC/DC circuit according to claim 2, wherein in response to the anti-reverse current device being the semi-controlled semiconductor device or the fully-controlled semiconductor device, the DC/DC circuit further comprises a detection device, wherein
the detection device is configured to detect at least one of a voltage of the positive input terminal to ground, a voltage of the input capacitor, a voltage change rate of the input capacitor, a current change rate of the inductor, a voltage of the floating capacitor, and a voltage change rate of the floating capacitor, and send a detection result to the controller,
the controller is configured to report a fault in response to a ground fault of the positive input terminal being determined based on the detection result, and control the fully-controlled semiconductor device that allows bidirectional current flow during operation to be turned off,
in response to the ground fault of the positive input terminal, the semi-controlled semiconductor device that allows unidirectional current flow during operation or the fully-controlled semiconductor device that allows unidirectional current flow during operation is automatically turned off, and
the controller is further configured to control the semi-controlled semiconductor device or the fully-controlled semiconductor device to be turned on when a ground fault does not occur at the positive input terminal.

4. The three-level DC/DC circuit according to any one of claims 1 to 3, wherein the anti-reverse current device is connected between the positive input terminal of the DC/DC circuit and the first node.

5. The three-level DC/DC circuit according to any one of claims 1 to 3, wherein the anti-reverse current device is connected between the first node and the second node.

6. The three-level DC/DC circuit according to any one of claims 1 to 3, wherein the anti-reverse current device is connected between the third node and the fourth node.

7. The three-level DC/DC circuit according to any one of claims 1 to 3, wherein the anti-reverse current device is connected between the fourth node and the positive output terminal of the DC/DC circuit.

8. The three-level DC/DC circuit according to any one of claims 1 to 3, wherein the anti-reverse current device is connected between the second node and the third node.

9. The three-level DC/DC circuit according to any one of claims 1 to 3, wherein the input capacitor comprises a first input capacitor and a second input capacitor,
wherein a first terminal of the second input capacitor is connected to a fifth node, a second terminal of the second input capacitor is connected to the negative input terminal of the DC/DC circuit, the positive input terminal of the DC/DC circuit is connected to the fifth node, and the anti-reverse current device is connected between the first node and the fifth node.

10. The three-level DC/DC circuit according to any one of claims 1 to 3, wherein the output capacitor comprises a first output capacitor and a second output capacitor,
wherein a first terminal of the second output capacitor is connected to a sixth node, a second terminal of the second output capacitor is connected to the negative output terminal of the DC/DC circuit, the positive output terminal of the DC/DC circuit is connected to the sixth node, and the anti-reverse current device is connected between the fourth node and the sixth node.

11. A power supply system, comprising the three-level DC/DC circuit according to any one of claims 1 to 10, wherein the power supply system further comprises an electrolyzer,
the positive output terminal of the three-level DC/DC circuit is connected to a positive terminal of the electrolyzer, the negative output terminal of the three-level DC/DC circuit is connected to a negative terminal of the electrolyzer, and the negative terminal or a neutral point of the electrolyzer is connected to ground.
